# EUROPEAN PATENT SPECIFICATION

(11) **EP 3 960 549 B1**
(45) Date of publication and mention of the grant of the patent: **24.04.2024**
(21) Application number: 21187511.7
(22) Date of filing: 23.07.2021
(51) Int. Cl.: B60R 21/13, B62D 23/00

(54) **ROLL-BAR SAFETY DEVICE AND VEHICLE COMPRISING SUCH A DEVICE**
ÜBERROLLBÜGEL SICHERHEITSVORRICHTUNG UND FAHRZEUG DAMIT AUSGESTATTET
DISPOSITIF DE SÉCURITÉ À BARRE DE SÉCURITÉ ET VÉHICULE COMPRENANT UN TEL DISPOSITIF

(30) Priority: 28.08.2020 IT 202000020626
(43) Date of publication of application: 02.03.2022
(73) Proprietor: Matricar di Matricardi Luciano, 66010 Torrevecchia Teatina (CH) (IT)
(72) Inventor: Matricardi, Luciano, 66026 Ortona (CH) (IT)
(74) Representative: PGA S.p.A.

(56) References cited:
- EP-A1- 2 151 368
- WO-A2-2008/149317
- CN-A- 107 651 022
- DE-A1- 2 103 611
- DE-A1- 10 046 764
- FR-A1- 2 614 256
- GB-A- 2 306 408
- US-A1- 2003 198 509

## Description

### Field of the invention

The present invention relates to the sector of terrestrial vehicles accessories, and in detail it concerns a safety cage device for off-road vehicles. The present invention also relates to a vehicle, in particular an off-road vehicle, equipped with this safety cage device.

### Prior Art

Vehicles can be equipped with different types of frame, and in particular, they can be equipped with chassis-type frames or side beams and crossbeams-type frames on which the bodywork is fixed, or be equipped with a load-bearing body. Although in the past several cars had a chassis-type frame, today most of the vehicles is equipped with a load-bearing body frame, and the side beam and crossbeam frame is typically intended for off-road vehicles.

In order to increase the rigidity of the passenger compartment and to offer more protection to the occupants, motor vehicles can be equipped with a safety cage device, commonly known as "roll bar", that is a tube structure which is bound to parts of the frame and/or the body and/or the passenger compartment in order to create an extremely rigid and robust cell. Typically nowadays it is possible to observe a safety cage device in cars intended for rally competitions, or in off-road vehicles. Typically safety cage devices are not present in OEM (original equipment manufacturer), and are installed aftermarket if the vehicle user intends to compete in certain competitions, or courses, in which there is a real risk of impact or overturning. Although the simplest forms of safety cage device include a reinforcement arch comprising two uprights and a crossbeam joined to said two uprights, most of the known safety cage devices has a more complex structure, able to identify a more or less complex cage.

To traditional safety cage devices may be fixed, in some cases, multi-point seat belts, designed to give a more balanced constraint of the driver to the seat compared to the constraint offered by traditional three-point roller shutter belts.

Typically, safety cage devices can be installed inside the passenger compartment or outside the bodywork; the latters are typically intended for application on off-road vehicles.

The safety cage devices outside the bodywork contribute to a significant aesthetic change of the vehicle. The safety cage devices inside the passenger compartment are typically installed in a significantly spaced position from the latter and, with their size, they reduce significantly the space inside the driver's cabin.

Document DE2103611, describes an anti-overturning protection device for motor vehicles, comprising uprights fixed to the rear wheels arches and reinforced by diagonal strut arranged in the rear part inside the vehicle. Document WO2008/149217A2 describes a load-bearing structure obtained by connecting a plurality of elements to a frame, including curved profiles associated with corresponding wheel arch shells, a firewall fixed to the lower crossbeam of the windscreen and a floor arranged between lower side beams and connected to a rear crossbeam. Document DE10046764A1, describes an anti-overturning protection device, comprising a tubular frame that can be inserted into a passenger compartment of a car, the type with side beams and crossbeams, and adjustment devices that allow the assembly of the tubular frame. Document GB2306408A, describes a safety cage for a minibus comprising roof uprights, side vertical uprights and center vertical uprights secured by floor brackets and plates, fixing points for the safety belts being provided of vertical uprights in intermediate points. Document FR2614256A1, describes a structure for a vehicle comprising in the lower part two longitudinal side beams, connected anteriorly and posteriorly by crossbeams and above by a pair of arches. Document CN107651022A, describes a detachable type frame structure for an off-road vehicle. The document DE10046764 A1 discloses a safety cage device according to the preamble of claim 1.

### Purposes of the invention

The purpose of the present invention is to describe a safety cage device for off-road vehicles which allows to solve the drawbacks described above. Therefore it is a fundamental object of the present invention to provide a safety cage device for vehicles that do not involves any contraction of the internal volume of the passenger compartment that can be used for housing the driver and passengers.

The present invention is firstly intended to provide a safety cage device capable of appreciably increasing the safety features of vehicle occupants, on which the safety cage device is installed, ensuring optimal protection, in particular in the areas inside the passenger compartment where find the driver and passengers' heads sitting in the vehicle front seats.

The present invention is secondly intended to provide a safety cage device, whose installation on a vehicle does not cause any significant contraction of the volume of the driver's cabin.

The present invention is thirdly intended to provide a safety cage device such that the external aesthetics, as well as the internal aesthetics, of the vehicle on which the safety cage device is installed are not substantially affected and/or altered.

### Summary

The object of the present invention will be now described in different aspects.

According to the present invention, a safety cage device (100) for vehicles is described, in particular for off-road vehicles (200), the safety cage device (100) being intended to produce a substantially rigid structural element intended for reinforcement and vehicle (200) protection and including:
- at least one first support arch (4) extending at least partially and mainly along a first direction (Y) and along a second direction (Z) orthogonal to the first direction (Y), and
- at least a pair of side beams (11) extending along a third oblique (X) direction respect to the first and second direction (Y, Z), said pair of side beams (11) comprising a first and a second side beam each of them joined at a predefined portion to the first support arch (4),
- in which the safety cage device (100) is configured and intended to be installed at least partially within the vehicle (200) bodywork without protruding from at least part of the upper portion of the vehicle (200) bodywork itself,
- in which the safety cage device (100) can be assembled.

According to another non-limiting aspect, the safety cage device (100) is a safety cage device with reduced or no overall size, configured and intended to be installed in substantial proximity to an internal face of the vehicle (200) bodywork.

According to another non-limiting aspect, the safety cage device (100) is configured and intended to be installed at least partially within the vehicle (200) bodywork without protruding from the upper portion of the vehicle (200) bodywork itself.

According to another non-limiting aspect, the safety cage device (100) comprises at least a first assembled operative configuration, or in use, in which it realizes said substantially rigid structural element intended for the reinforcement and protection of the vehicle, and includes at least a second disassembled configuration, intended to favor the introduction or extraction of the safety cage device (100) from the said vehicle (200).

According to another non-limiting aspect, the third direction (X) is orthogonal to the first direction (Y).

According to another non-limiting aspect, the third direction (X) is orthogonal to the second direction (Z).

According to another non-limiting aspect, the safety cage device (100) is at least partially, optionally integrally, made of metallic material, and/or at least the first support arch (4) and the side beams (11) are made of metallic material.

According to another non-limiting aspect, the safety cage device (100) has a tubular and/or boxed structure.

According to another non-limiting aspect, the boxed structure is at least partially with a substantially rectangular section.

According to another non-limiting aspect, the first support arch (4) and the side beams (11) have a substantially boxed structure, optionally with a rectangular section.

According to another non-limiting aspect, the said structure substantially boxed is a substantially boxed structure with reduced or no overall size.

According to another non-limiting aspect, said substantially boxed structure has a smaller thickness compared to the longitudinal size.

According to another non-limiting aspect, the safety cage device (100) is configured to be at least partially covered by an internal coating layer of said bodywork.

According to another non-limiting aspect, the safety cage device (100) is configured and intended to be installed at the cavity space between the internal face of the bodywork and a coating element of the bodywork.

According to another non-limiting aspect, the safety cage device (100) is configured and intended to be installed in correspondence and substantial proximity of at least the central upright (202) and/or the rear upright (203) of the bodywork.

According to another non-limiting aspect, the first support arch (4) is configured and intended to be installed at the central upright (202) of said vehicle (200).

According to another aspect, the first support arch (4) comprises a crossbeam (4s) which has such a length to cross, in use, a bodywork roof (200p) and the first support arch (4) is configured to lie, in use, in substantial alignment with the central upright (202) of the vehicle (200) bodywork.

According to another non-limiting aspect, the safety cage device (100) comprises a second support arch (7) extending at least partially and mainly along a first direction (Y) and along a second direction (Z) orthogonal to the first direction (Y).

According to another non-limiting aspect, the second support arch (7) substantially lies on a parallel plane to the first support arch (4).

According to another non-limiting aspect, the second support arch (7) is fixed to said side beams (11).

According to another non-limiting aspect, the second support arch (7) is fixed to said side beams (11) at an opposite end compared to the end at which the first support arch (4) is fixed.

According to another non-limiting aspect, the second support arch (7) comprises a crossbeam (7s) which has such a length to cross, in use, a bodywork roof (200p).

According to another non-limiting aspect, the second support arch (7) is configured to lie, in use, in substantial alignment with the rear upright (203) of the bodywork.

According to another non-limiting aspect, the safety cage device (100) comprises at least a first pair of supports (5) configured and intended to fix the safety cage device (100) to the vehicle (200) frame.

According to another non-limiting aspect, the first pair of supports (5) is configured to rigidly join the safety cage device (100) to the vehicle (200) frame and is configured to support the weight of the safety cage device (100).

According to another non-limiting aspect, the first pair of supports (5) is configured to provide a symmetrical support of the safety cage device (100) on the vehicle (200) frame.

According to another non-limiting aspect, the first pair of supports (5) is configured and intended to be fixed to the side beams of the said vehicle (200) frame and/or to crossbeams of the said vehicle (200) frame.

According to another non-limiting aspect, the vehicle frame is a side beams and crossbeams-type frame.

According to another non-limiting aspect, the first pair of supports (5) is directly connected to the first support arch (4).

According to another non-limiting aspect, the first pair of supports (5) is directly connected to the first support arch (4), in particular to a lower portion of a first and a second upright of the first support arch (4).

According to another non-limiting aspect, the first support arch (4) comprises a first and a second upright.

According to another non-limiting aspect, the first and the second upright are substantially oriented along said second direction (Z) and each of them extends in parallel, respectively to a left and right side (200s, 200d) of the vehicle (200).

According to another non-limiting aspect, the first pair of supports (5) comprises a first support fixed to the first upright of the first support arch (4) and a second support fixed to the second upright of the first support arch (4).

According to another non-limiting aspect, the first and the second support each have a respective first and second end, each comprising connection flanges.

According to another non-limiting aspect, the connection flanges are configured to couple directly with connection flanges of an end portion of the first support arch (4), in particular with connection flanges of a lower end of the uprights of the first support arch (4) and/or are configured to couple directly with one frame portion of said vehicle (200).

According to another non-limiting aspect, said frame portion of said vehicle (200) is a side beams and crossbeams-type frame portion, and alternatively comprises a side beam or a crossbeam.

According to another non-limiting aspect, the first pair of supports (5) comprises L-shaped supports.

According to another non-limiting aspect, the first pair of supports (5) is configured to be fixed to a longitudinally intermediate and/or central portion of the vehicle (200) frame.

According to another non-limiting aspect, the safety cage device (100) comprises at least a second pair of supports (8) configured and intended to fix the safety cage device (100) to the vehicle (200) frame.

According to another non-limiting aspect, the second pair of supports (8) is configured to provide a symmetrical support of the safety cage device (100) on the vehicle (200) frame.

According to another non-limiting aspect, the second pair of supports (8) is directly connected to the second support arch (7).

According to another non-limiting aspect, the second pair of supports (8) comprises a first and a second support.

According to another non-limiting aspect, the second pair of supports (8) is configured to rigidly join the safety cage device (100) to the vehicle (200) frame and is configured to support the weight of the safety cage device (100).

According to another non-limiting aspect, the second pair of supports (8) is configured and intended to be fixed to the side beams of the said vehicle (200) frame and/or to crossbeams of the said vehicle (200) frame.

According to another non-limiting aspect, the first and the second support each have a respective first and second end, each comprising connection flanges.

According to another non-limiting aspect, the connection flanges are configured to couple directly with connection flanges of an end portion of the first support arch (4), in particular with connection flanges of a lower end of the upright of the first support arch (4) and/or are configured to couple directly with a portion of the frame of said vehicle (200).

According to another non-limiting aspect, the second support arch (7) comprises a first and a second upright.

According to another non-limiting aspect, the first and the second upright are substantially oriented along said second direction (Z) and each of them extends in parallel, respectively to a left and right side (200s, 200d) of the vehicle (200).

According to another non-limiting aspect, the first and the second upright are configured to be respectively positioned in correspondence and/or substantial proximity of the left and right rear upright of the vehicle (200) bodywork.

According to another non-limiting aspect, the second pair of supports (8) comprises a first support fixed to the first upright of the second support arch (7) and a second support fixed to the second upright of the second support arch (7).

According to another non-limiting aspect, the second pair of supports (7) includes L-shaped supports.

According to another non-limiting aspect, the second pair of supports (7) is configured to be fixed to a longitudinally intermediate and/or central portion of the vehicle (200) frame.

According to another non-limiting aspect, the first pair of supports (5) is configured to be assembled to the first support arch (4) in a removable way, optionally by means of a screwed connection.

According to another non-limiting aspect, the second pair of supports (8) is configured to be assembled to the second support arch (7) in a removable way, optionally by a screwed connection.

According to another aspect, the safety cage device (100) comprises a front frame (1) configured to supplement and/or replace a vehicle (200) windscreen frame (201).

According to another aspect, the safety cage device (100) comprises a first plurality of reinforcing elements (3), crossed, positioned between the first support arch (4) and the front frame (1).

According to another non-limiting aspect, the front frame (1) is configured to accommodate a windscreen.

According to another non-limiting aspect, the front frame (1) is configured to replace an OEM vehicle windscreen frame.

According to another non-limiting aspect, the front frame (1) defines, when the safety cage device (100) is installed, a pair of front uprights, or "A" uprights, of the bodywork.

According to another non-limiting aspect, the first plurality of reinforcing elements (3) is configured to structurally constrain the crossbeam (4s) of the first support arch (4) to the front frame (1) in substantial correspondence of a roof (200p) of the vehicle (200) bodywork.

According to another aspect, the safety cage device (100) comprises a second plurality of reinforcing elements (6), crossed, positioned between the first support arch (4) and the second support arch (7).

According to another aspect, the second plurality of reinforcing elements (6) is configured to structurally constrain the crossbeam (7s) of the second support arch (7) to the crossbeam (4s) of the first support arch (4).

According to another non-limiting aspect, the safety cage device (100) comprises a plurality of lower side beams (9) substantially aligned along a parallel to said third direction (X) and directly related:
- at one their first portion, optionally at their first end, to the first support arch (4), and
- at one their second portion, optionally at their second end, to the second support arch (7).

According to another non-limiting aspect, the plurality of lower side beams (9) includes a left side beam and a right side beam.

According to another non-limiting aspect, the safety cage device (100) comprises a plurality of front side beams (2), each of them substantially extending along a parallel direction to said third direction (X), and directly joined:
- at one their first portion, optionally at their first end, to the first support arch (4), and
- at one their second portion, optionally at their second end, to the front frame (1).

According to another non-limiting aspect, the front side beams (2) are connected with the first support arch (4) and with the front frame (1) in correspondence of a junction portion between the left and right uprights of the first support arch (4) and the crossbeam (4s) of the first support arch (4), and in correspondence of an upper portion of the front frame (1), optionally at the left and right side edges of the front frame (1).

According to another non-limiting aspect, the safety cage device (100) comprises a central crossbeam (10), directly connected at its first and second portion, optionally at its first and second end, to the first support arch (4).

According to another non-limiting aspect, the safety cage device (100) comprises a central crossbeam (10), directly connected at its first and second portion, optionally at its first and second end, respectively to the first and to the second upright of the first support arch (4).

According to another non-limiting aspect, the safety cage device (100) comprises a plurality of lateral crossbeams (10A, 10B) joined to the first support arch (4) at their first ends and to the second support arch (7) at their second ends.

According to another non-limiting aspect, the lateral crossbeams (10A, 10B) are arranged above the lower side beams (9).

According to another non-limiting aspect, each of the crossbeams (10A, 10B) extends along an inclined direction compared to the third direction (X), so that the distance between each of the lateral crossbeams (10A, 10B) and the respective between the lower side beams (9) at the first support arch (4) is greater than the distance between each of the side crossbeams (10A, 10B) and the respective between the lower side beams (9) at the second support arch (7).

According to another non-limiting aspect, the safety cage device (100) is configured to be substantially hidden by an internal coating of said bodywork.

According to a another non-limiting aspect, a vehicle (200) is described, in particular an off-road vehicle, comprising a frame and a bodywork joined to said frame and defining at least a left side (200s), a right side (200d) and a roof (200p) positioned above and joining the left side (200s) to the right side (200d), when said vehicle comprises a safety cage device (100) according to one or more of the previous aspects.

According to another non-limiting aspect, the frame is a side beams and crossbeams-type frame.

According to another non-limiting aspect, the safety cage device of (100) is fixed to the vehicle frame at least at two points, preferably at four points, even more preferably at six points.

### Description of the figures

A preferred and non-limiting embodiment of the object of the present invention will now be described here with the aid of the attached figures. In particular:
- Figure 1 illustrates a perspective view of an off-road vehicle equipped with a safety cage device according to the present invention;
- Figure 2 illustrates a perspective view of the safety cage device according to the present invention, isolated respect to said off-road vehicle;
- Figure 3 illustrates a front view of the safety cage device object of the present invention when installed in the off-road vehicle;
- Figure 4 illustrates a side view of the safety cage device object of the present invention when installed in the off-road vehicle; and
- Figure 5 illustrates a rear view of the safety cage device object of the present invention when installed in the off-road vehicle.

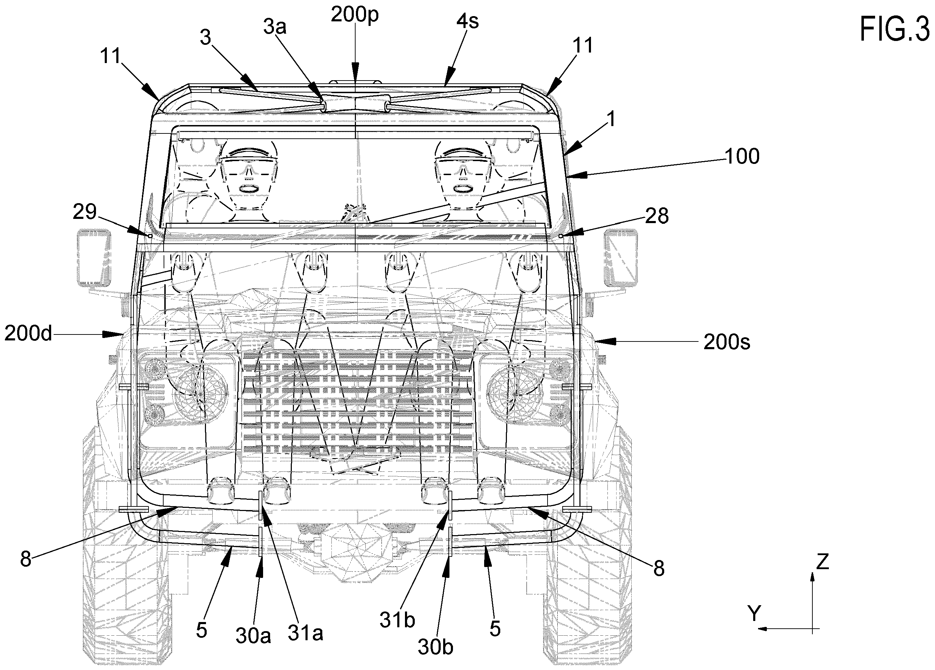

In order to make more clear, also visually, the high level of protection ensured to the occupants of the off-road vehicle by the safety cage device according to the present invention, in figures 3 to 5 human shapes have been added at all the available seats, it is possible to appreciate how these shapes represent the driver (seated in the front part of the passenger compartment and oriented along the travel direction of the vehicle) and the five passengers (one of whom sitting next to the driver, the remaining four being seated in the rear part of the passenger compartment and oriented transversely to the travel direction of the vehicle).

### Detailed description

The invention of the present invention concerns a safety cage device 100, or "roll bar", for off-road vehicles. The attached figures illustrate an off-road vehicle (represented with lighter lines and identified by the reference number 200) in order to allow the reader to better understand the exact positioning of the safety cage device compared to the vehicle bodywork. Although the figures decorating the present description illustrates a particular type of off-road vehicle 200, in particular a Land Rover Defender 90 SW, however this type of vehicle must not be understood as limiting, since the safety cage device 100 described here could be applicable to other types of off-road vehicle 200 M1 category, for example, and, in a purely illustrative way, to a Mitsubishi Pajero, a Nissan Patrol, a Toyota Land Cruiser or Prado, a Jeep Wrangler, a Suzuki Samurai or off-road pick-up vehicles such as Nissan Navara, Mitsubishi L200, GMC Sierra.

The Applicant points out that for "off-road vehicle" type, vehicles as M1 or N1 do not have to be intended in a limiting manner, but more generally, for the purposes of the present invention, it is intends any vehicle suitable and preferably prepared, to circulate also off-road, including three-wheeled vehicles, tracked such as snowmobile, farm vehicles such as tractors, or higher category vehicles, such as M2 or M3 or N2 or N3. Therefore, the off-road vehicle 200 described here can be a vehicle with two axles or with several (three or more) axles.

In order to describe better the placement of the safety cage device 100 compared to the vehicle, some parts of the vehicle itself are defined here.

The off-road vehicle 200 comprises a frame, optionally a chassis-type frame or side beams and crossbeams-type frame, which represents the actual load-bearing structure of the vehicle. A bodywork is fixed to the frame which includes a left side 200s and a right side 200d joined together at the top by a roof 200p.

The vehicle engine and the transmission assembly are also arranged on the frame, typically 4x4, optionally equipped with off-road driving assistance systems, including, but not limited to, central differentials, front and/or rear lockable, gearbox range reducers, stabilizer bar release devices.

At the end, the off-road vehicle 200 here shown is equipped with an access door. However, this configuration must not be understood in a limiting way. In fact, there may be a rear door to access the luggage area or there may be a box (in the case of a pick-up type off-road vehicle). Side doors can be one or two for each side 200s, 200p.

The vehicle bodywork, which in the case of the embodiment shown here does not perform a load-bearing function, identifies a pair of front uprights (left, right), or "A" upright, at the windscreen frame, a pair of central uprights 202 (left, right), or "B" uprights, just behind the left and right front doors, and a pair of 203 (left, right) rear uprights, or "C" uprights at the end rear.

To better describe the spatial alignment of the various portions of the safety cage device 100, also compared to the off-road vehicle 200, here are defined reference axis which identify: a first direction (Y axis), a second direction (Z axis) and a third direction (X axis). The three directions are orthogonal to each other. The Y axis, when referring to the vehicle off-road 200, identifies the transversal axis of the vehicle. The Z axis, when referring to the off-road vehicle 200, identifies the vertical axis of the vehicle. The X axis, when referring to the off-road vehicle 200, identifies the longitudinal axis of the vehicle.

The safety cage device 100 according to the present invention is of the assemblable-type, so it can comprise several assembled configurations for use. The safety cage device 100 comprises at least a first support arch 4 extending at least partially and mainly along a first direction (Y axis) and along a second direction (Z axis) and advantageously at least a pair of spars 11 extending along a third direction (X axis). The pair of spars 11 comprises a first spar and a second spar, each joined in correspondence to a predefined portion (for example at the first end) to the first support arch 4. This predefined portion is in particular an end portion. The spars 11 can be oriented parallel to the third direction (and then be orthogonal to the first support arch 4), in particular when the vehicle 200 comprises a rear cabin. Alternatively, the spars 11 can extend in an oblique direction compared to the first support arch 4, in particular when the vehicle 200 has no rear cabin, or is a pick-up type (in this case of an off-road pick-up vehicle, the safety cage device 100 could also not have the spars 11, especially if the first support arch 4 is in itself considered suitable for ensuring the appropriate mechanical characteristics). The orientation of the spars 11 can be such that when the safety cage device 100 is properly installed, the spars 11 extend towards the bottom starting from the first support arch 4, having a minimum height at the opposite end to the portion, or at the end, fixed to the support arch 4 itself.

The safety cage device 100 described here is configured and intended to be installed at least partially within the off-road vehicle 200 bodywork without protruding, at least, from part of the upper portion of the off-road vehicle 200 bodywork itself. The use of the expression "at least partially" has been deliberately chosen since part of the safety cage device 100 protrudes out of the bodywork in an area below the latter, without protruding from the shape overall identified by the vehicle. This part of the safety cage device 100, which will be better described hereinafter, is configured and specifically intended to be installed and fixed to the vehicle frame.

Since the safety cage device 100 object of the present invention can be assembled, its components can be joined or separated from each other. The safety cage device 100 has at least a first assembled operating configuration, which is an operating configuration for use, and a disassembled configuration. This eases the installation of the safety cage device 100 and it is particularly useful since the safety cage device is designed to be introduced into the bodywork through the doors of the vehicle 200, which not only have a limited opening angle, but also define passages partially obstructed by the presence of seats. Therefore, a safety cage device 100 such as the one object of the present invention made in an assemblable configuration is an aid to installation in particular in those vehicles in which the available space is limited.

In order to guarantee the preservation of space as much as possible inside the bodywork, the safety cage device 100 is a safety cage device with reduced or no overall encumbrance, configured and intended to be installed in substantial proximity to an internal face of the off-road vehicle 200 bodywork.

According to a preferred embodiment, the safety cage device 100 object of the present invention is at least partially made of metallic material, and preferably it is substantially entirely made of metallic material in order to provide the necessary strength in the event of an impact or overturning of the vehicle. Preferably, the safety cage device 100 object of the present invention is made of steel or alloy steel. In particular, at least the first support arch 4 and all the spars 11 are made of metallic material, in particular and optionally of steel or aluminum, or of composite material, in particular of carbon fiber. Non-structural parts of the safety cage device 100, for example coating layers, joints or other, can be made of materials of lower strength and/or plastic material and / or composite material.

Another preferred embodiment of the present invention, particularly appreciable as it allows to obtain an optimization of the mechanical characteristics, simultaneously with a significant reduction in weight, provides that the safety cage device 100 is made (substantially in its entirety) of composite material, for example carbon fiber or kevlar.

In particular, the safety cage device 100 is designed to be positioned in correspondence to a cavity space between the internal face of the bodywork and a coating of the bodywork itself, for example typically made of non-woven fabric. This concurs not to significantly alter the internal aesthetic appearance of the vehicle.

Precisely for this reason, as can be seen from the attached figures, the safety cage device 100 presents a box-like structure, at least partially. In particular, the section of various elements of the safety cage device 100 is rectangular shaped, in particular at least part of the the first supporting arch 4 and the spars 11. Moreover, this allows for two shorter sides, in particular the sides that extend towards the center of the bodywork, further contributing to the reduction of the transversal encumbrance and facilitating the incorporation operation in substantial correspondence of small recesses or dihedrals, and facilitating the coating of the safety cage device 100 from the traditional coating of the bodywork without particular adaptation operations. Nevertheless, an alternative embodiment of the safety cage device 100, not represented in the attached figures, may have elements with a circular section or in any case a substantially tubular shape.

In the simplest version, not shown in the attached figures, the safety cage device 100 object of the present invention is configured and intended to be installed in correspondence and substantial proximity to the central upright 202 and/or to the rear upright 203 of the off-road vehicle 200 bodywork. The installation of the safety cage device 100 so as to cover at least the proximity area of the central upright 202 is preferable, because it allows to significantly strengthen the portion of the vehicle near the trunk and head of the driver and any passenger at his side, and this configuration of off-road vehicle occupation is what often occurs. However, as clearly visible in the attached figures, the complex structure of the safety cage device 100 object of the present invention, in its illustrated embodiment, allows optimal protection of all internal parts of the bodywork.

In particular, in fact, in addition to the first support arch 4 that comprises a central crossbeam 4s (oriented parallel to the Y axis, and therefore crossing the roof 200p) and a first and second upright joined to it (at its left and right ends), the safety cage device 100, in the embodiment shown in the attached figures, comprises a second support arch 7 which is substantially positioned at the rear portion of the vehicle.

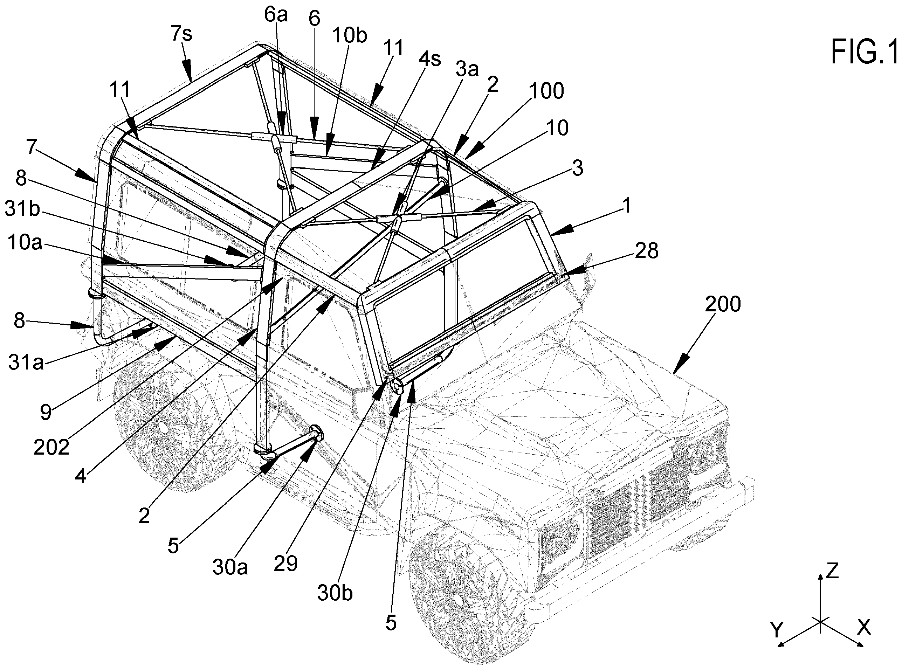

For example, in figure 1 and in figure, 2 it is possible to observe that the first support arch 4 comprises a first and a second upright each comprising a first sub-portion completely parallel to the Z axis and a second sub-portion (higher than the first) slightly inclined compared to the Z axis. This configuration is not intended to be limiting.

Similarly to the first support arch, the second support arch 7 also extends at least partially and mainly along the first direction (therefore parallel to the Y axis) and along the second direction (therefore parallel to the Z axis). The second support arch comprises: a first upright and a second upright, respectively configured and intended to be in use fixed in substantial proximity to the left and right rear upright 203 of the off-road vehicle 200 bodywork and a crossbeam 7s joined directly to the upper ends of the first and second upright, in particular at its own ends. The crossbeam 7s crosses the roof 200p in substantial correspondence to its rear end portion. Therefore, the first support arch 4 and the second support arch 7 are mutually positioned on planes which are substantially parallel.

The distance (measured along the X axis, therefore along the axis corresponding to the longitudinal axis of the off-road vehicle 200) that separates the first and second support arches 5, 7 is predefined and is determined by the designer according to the specific typology and/or model of vehicle for which the safety cage device 100 is intended. However, where certain models differ only in wheelbase length, and ideally they have a possibility of installing the same size, for example of the second support arch 7, for the manufacturer it will be sufficient only to adapt the length of the spars 11 to appropriately join these first and second support arches 5, 7, otherwise (at least in the configuration disassembled) mutually separated.

The previously fixed spars 11 are in detail positioned in an upper region of the safety cage device 100, that is an area such as to be in use in substantial proximity to the bodywork roof 200p. Preferably, when the safety cage device 100 is intended to equip a Land Rover Defender 90 or 110 or 130, in particular in the SW versions, spars 11 are split-type, each comprising a first and a second element parallel to each other, configured in use to lie above and respectively below the area (in particular the height) of the bodywork at which there is the so-called "sky window", that is that small rounded window that provides brightness to the upper part of the bodywork itself. This configuration is not to be understood in a limiting way, since it is also possible to have a traditional spar 11 with a single element, not split-type, for each left and right side of the vehicle.

The spars 11 are directly joined to the first support arch (first end, or more generally first predefined portion of the same spar) and to the second support arch (second end or more generally second predefined portion of the same spar). Thanks to this aspect, not only the spars 11 contribute to provide protection in the longitudinal direction, but also assist in the correct maintenance of the distance and the reciprocal position between the first and second support arch 4, 7, contributing to the definition of a cage structure.

In the safety cage device 100 described here, the spars 11 have a length substantially equal to the distance between the rear uprights 203 and the central uprights 202 of the bodywork, not being configured to overhang side doors of the off-road vehicle 200. However, it is possible to have a configuration of spars 11 configured to lie in use above an upper limit of the rear side doors of the off-road vehicle 200.

In order to optimize the strengthening and protection of the internal area of the bodywork below the roof central area 200p, the Applicant has conceived a first plurality of reinforcing elements 3, crossed, adapted to overhang in use the area near the heads of the driver and of the passenger seated at his side. The reinforcing elements are fixed at the front frame 1 and the first support arch 4.

In detail, a first element of the first plurality of reinforcing elements 3 has its first end fixed at a left upright of the first support arch 4 and its second end fixed at a right upright of the front frame 1. A second element of the first plurality of reinforcing elements 3 has its first end fixed at a right upright of the first support arch 4 and its second end fixed at a left upright of the front frame 1. These two elements, if the off-road vehicle 200 is viewed from above, identify an "X" structure.

The Applicant has observed that the first plurality of reinforcing elements can be, for all intents, a pair of reinforcing elements or be a plurality of four reinforcing elements held together at a their end by a central cross-shaped fixing element 3a. This configuration is actually the one shown in the embodiment of the attached figures.

The Applicant observes that the front frame 1 is preferably part of the safety cage device 100 object of the present invention. The front frame 1 comprises a left upright, a right upright, a lower crossbeam and an upper crossbeam, and it is, in any case, configured to provide a load-bearing support structure for the windscreen of the off-road vehicle 200. In the embodiment illustrated in the attached figures, the safety cage device 100 is intended for Land Rover Defender 90 models and includes a front frame which is configured to replace the vehicle's OEM windscreen frame. Replacing the OEM windscreen frame with the front frame 1 allows to strengthen the front portion of the driver's cabin without sacrificing space. The front frame 1, when the safety cage device 100 is properly installed on the off-road vehicle 200, defines through its uprights the left "A" upright and the right "A" upright of the vehicle. In case of replacement, a so-called "laminated" glass is adopted for the windscreen, that is formed by two sheets and by an intermediate plastic layer, which is fixed at its perimeter to the front frame 1 according to known techniques, i.e. by means of gaskets and adhesives.

About the front frame 1 of the safety cage device 100 in a preferred embodiment of the invention, the Applicant observes that its presence can be particularly useful for those vehicles which, precisely due to the structure with non-load-bearing bodywork and side beams and crossbeams-type frame, they are devoid of particularly robust "A" uprights and/or are subjected to the risk of impact with objects located at a height substantially equal to that of the windscreen.

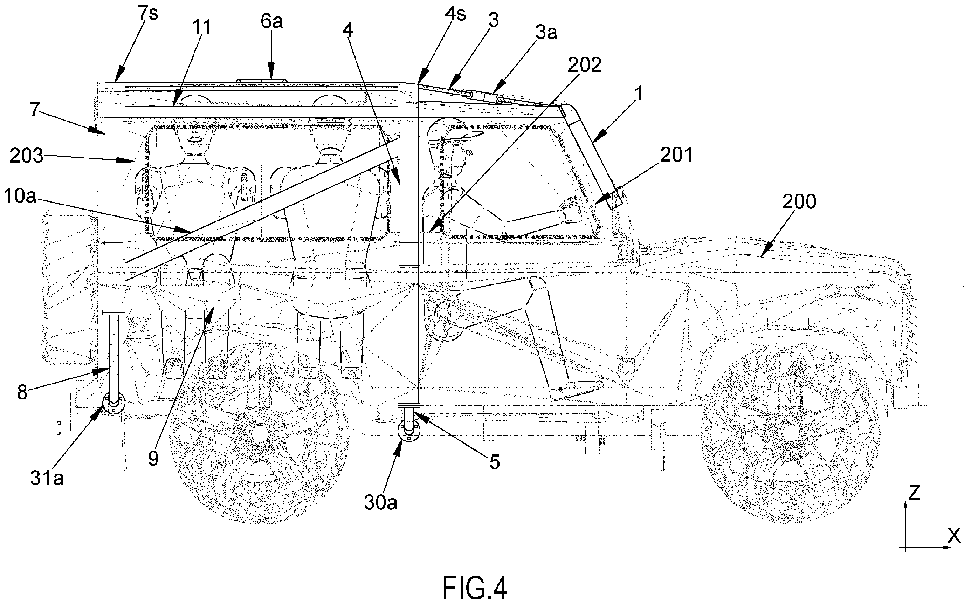

In fact, the front frame 1 integrated in the safety cage device 100 makes it possible to better protect the front part of the passenger compartment, where the driver and the passenger is at his side sit, in particular at the heights at which the driver's and passenger's heads can be found. In this regard, the representation in figure 4 is emblematic, which shows how the driver and the passenger sitting next to him are in a potentially critical region of the passenger compartment, being, in particular their heads, at a reduced distance both from the roof (especially in the event of the vehicle overturning) and from the windscreen (especially in the event of a frontal impact).

In this regard, it should be noted that the front frame 1 integrated in the safety cage device 100 acts to contain the deformations that occur in the car in case of a frontal impact, preventing a car crushing induced by this frontal impact from affecting the passenger compartment, in particular the volume of the passenger compartment adjacent to the windscreen (where the driver's and passenger's heads are presumed to be). Further, it is highlighted that the front frame 1 integrated in the safety cage device 100 allows the anchoring of the reinforcing elements 3 and that these reinforcing elements 3 (together with the upper crossbeam of the front frame 1) prevent a collapse of the roof 200p, with consequent crushing of the passenger compartment, in the event of the vehicle overturning or impact from above with a deforming body, such as a boulder.

It is also a second plurality of reinforcing elements 6, crossed, positioned between the first supporting arch 4 and the second supporting arch 7. The elements of the second plurality of reinforcing elements are intended to overhang in use the proximity to the passengers' head in the rear area of the vehicle and/or the area near the load compartment or luggage compartment of the vehicle. In case of off-road pick-up vehicle, the safety cage device 100 could also be without the reinforcing elements 6.

In detail, a first element of the second plurality of reinforcing elements 6 has its first end fixed at a left upright of the second support arch 7 and its first second end fixed at a right upright of the first support arch 4. A second element of the second plurality of reinforcing elements 6 has its first end fixed at a right upright of the second support arch 7 and its second end fixed at a left upright of the first support arch 4. These two elements, if the off-road vehicle 200 is viewed from above, identify an "X" structure.

The Applicant has observed that the second plurality of elements of reinforcement can, in effect, be a pair of reinforcing elements or be a plurality of four reinforcing elements held together at its end by a central cross-shaped fixing element 6a. This configuration is actually the one shown in the embodiment of the attached figures.

The Applicant has also observed the need to offer a safety cage device 100 with adequate resistance and protection efficacy in correspondence to an intermediate and low portion of the bodywork. For this reason, a preferred and non-limiting embodiment of the safety cage device 100 comprises a plurality of lower spars 9, in particular a lower left spars and a lower right spar. These spar each extend in a parallel direction to the direction identified by the X axis. The lower spars 9 are configured to extend to such a height that, when the safety cage device 100 is properly installed in the vehicle, they lie above an upper limit of the rear mudguard of the vehicle 200 and/or lie below the lower height of the vehicle's side doors window. Therefore, the lower spar 9 extend above the support surface of the rear seats of the vehicle 200 and below the latter. Such lower spars 9 are particularly useful in the case of safety cage devices 100 intended for vehicles such as Defender 90 and 110, in which there is a long promiscuous compartment for loading and accommodating passengers of high longitudinal extension. In the case of an off-road pick-up vehicle, the safety cage device 100 may also not have the lower spars 9.

In the embodiment illustrated in the attached figures, the lower spars 9 are directly joined at one their first portion, in particular at their first end, at the first support arch 4, and at one their second portion, in particular at their second end, at the second support arch 7.

The lower left and right spars 9 are shown in the attached figures with a rectangular box-shaped section, but this configuration should not be understood in a limiting way, since it is possible to make these lower spars 9 with different sections, for example with circular sections.

Preferably, although not limitedly, the lower spars 9 and the upper spars 11 are parallel to each other and their assembly is intended to represent a protective substructure surrounding a rear area of the off-road vehicle 200, in particular its luggage loading area.

In addition, the device object of the present invention comprises a plurality of front spars, indicated with the reference number 2, which also develop along a direction substantially parallel to the third direction identified by the X axis.

These front spars 2 are directly joined at one their first portion, in particular at their first end, to first support arch 4, and at their second portion, in particular at one their second end, to the front frame 1.

The junction with the first support arch 4 and with the front frame 1 occurs at a junction portion between the left and right uprights of the first support arch 4 and the crossbeam 4s of the arch itself, and at the upper portion of the front frame 1, in particular at the left side and right side edges of the front frame 1. When the safety cage device 100 object of the present invention is properly installed in the vehicle, the position assumed from the front side beams 2 is such that they are located at the portions in which the left side 200s and the right side 200d join with the roof 200p, above the door ring of the vehicle's front left and right side doors.

As can be seen very clearly for example from figures 1 and 4, when the safety cage device 100 also includes the front spars 2, it is possible to have an optimal protection of the upper portion of the door ring of the front side doors; this protection occurs by partially surrounding this upper portion of the door ring through (frontally) the uprights of the front frame 1, (above) the front spars 2, and (posteriorly) through the left or right uprights of the first support arch 4.

The assembly formed by the first support arch 4, by the spars 2, by the front frame 1 and by the first plurality of reinforcing elements 3 forms, as a whole, an extremely robust and rigid protection cage both in the longitudinal direction and in the transversal direction, able to offer optimal protection to the front occupants of the off-road vehicle 200 without compromising the space inside the bodywork.

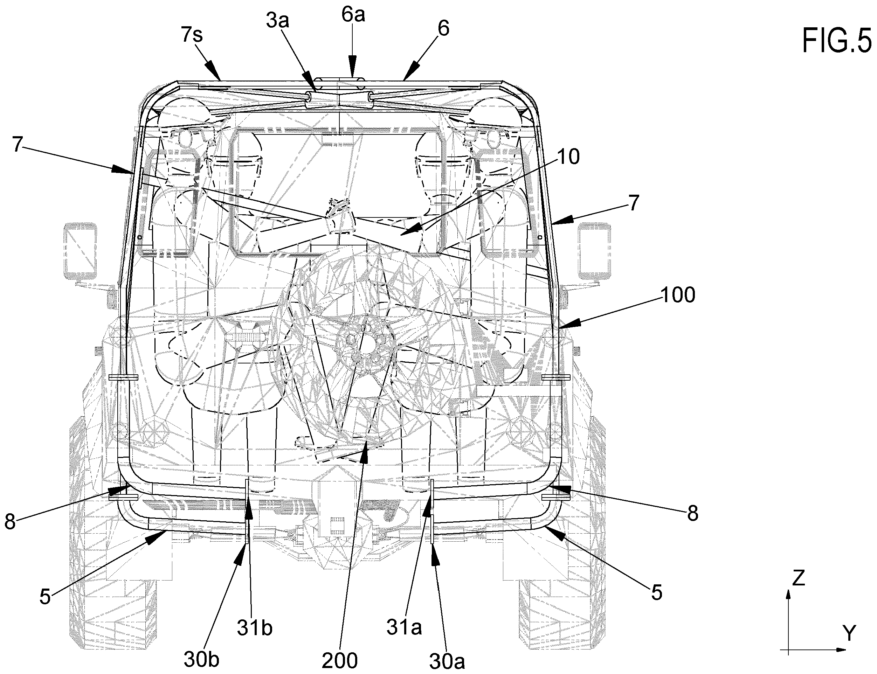

Preferably, the safety cage device 100 which is the object of the present invention also comprises a central crossbeam 10 directly connected at its first and second portions, optionally at its first and second ends, to the first and respectively to the second upright of the first support arch 4. In particular, the central crossbeam 10 is joined to said uprights at one their intermediate dimension. This central crossbeam 10, which develops along a direction substantially parallel to the direction identified by the Y axis, can be substantially parallel to the crossbeam 4s of the first support arch 4 or can alternatively be inclined compared to the latter. The embodiment of the safety cage device 100 illustrated in the attached figures well represents the latter solution, in which the safety cage device 100 has a configuration of inclined installation in which the central crossbeam 10 is installed at a higher height at the left upright and at a lower height at the right upright. This configuration is, for example, clearly visible in figure 5.

The purpose of the central crossbeam 10 is to provide a further strengthening of the cage realized by the safety cage device 100 for the protection of the front occupants of the off-road vehicle 200, and in particular to provide a further strengthening and protection for the back area of these occupants.

The central crossbeam 10 is removably fixed to the first support arch, and can be fixed, in particular, through a plurality of screws to the uprights of the first support arch 4. Although in the attached figures the section of the central crossbeam 10 is circular, this shape must not be understood in a limiting way, since it is possible to make the central crossbeam with a rectangular section, for example.

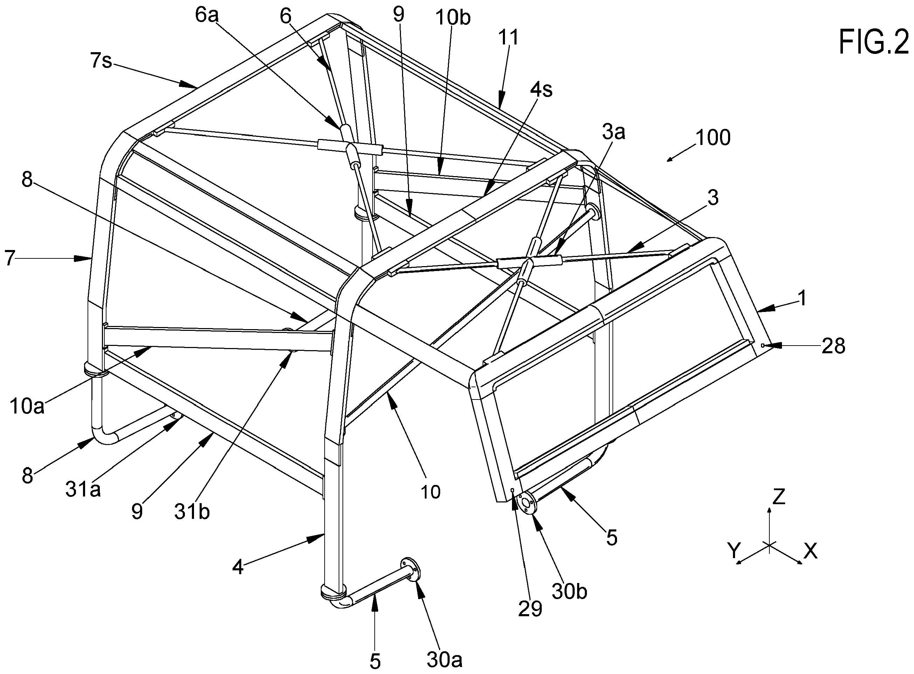

Advantageously, the central crossbeam 10 is assembled with a predetermined inclination, appreciable, for example, in figure 2, from which it is clear that the central crossbeam 10 being not parallel to the crossbeam 4s of the first support arch 4. In other words, the fixing points of the central crossbeam 10 respectively to the first and the second upright of the first support arch 4 are located at different heights. The inclination of the central crossbeam 10 acts to contrast the deformation of the first support arch 4 in the event of a side impact. As an alternative to the central crossbeam 10, as shown in the figures, a pair of central crossbeams can be used to define a central stiffening structure substantially shaped like an "X". For the sake of completeness, it is noted how (especially if the vehicle 200 does not have a rear door) the safety cage device 100 may also include a similar rear crossbeam or a similar rear stiffening structure, with fixing to the second support arch 7.

In an advantageous embodiment of the present invention, the safety cage device 100 further comprises a first lateral crossbeam 10A and a second lateral crossbeam 10B removably fixed between the first support arch 4 and the second support arch 7. More in detail, the first lateral crossbeam 10A is removably fixed to the first upright (or left upright) of the first support arch 4 and to the second upright (or left upright) of the second support arch 7, while the second lateral crossbeam 10B is removably fixed to the second upright (or right upright) of the first support arch 4 and to the second upright (or right upright) of the second support arch 7.

Preferably, the lateral crossbeams 10A and 10B are screwed to the uprights of the support arches 4 and 7 (however, according to the present invention, the possibility of providing a different connection between the lateral crossbeams 10A and 10B and the uprights of the support arches 4 and 7, for example, by welding, is not precluded). Preferably, the side crossbeams 10A and 10B are made in the form of tubular section reinforcing bars (however, the possibility of using solid section bars, such as side crossbeams 10A and 10B, is not precluded according to the present invention). The side crossbeams 10A and 10B are arranged above the lower spars 9. In its preferred embodiment the first side crossbeam 10A has a predetermined inclination compared to the corresponding lower side spars 9 (and consequently compared to the third direction identified by the X axis), so the distance between the first lateral crossbeam 10A and the corresponding lower spar 9 decreases moving from the first support arch 4 to the second support arch 7. In other words, the height at which the first lateral crossbeam 10A is fixed to the corresponding upright of the first support arch 4 is greater than the height at which the first lateral crossbeam 10A is fixed to the corresponding upright of the second support arch 7. In its preferred embodiment, the second lateral crossbeam 10B has a predetermined inclination compared to the corresponding lower side beam 9 (and consequently compared to the third direction identified by the X axis), so that the distance between the second lateral crossbeam 10B and the corresponding lower spar 9 decreases moving from the first support arch 4 to the second support arch 7. In other words, the height at which the second lateral crossbeam 10B is fixed to the corresponding upright of the first support arch 4 is greater than the height at which the second lateral crossbeam 10B is fixed to the corresponding upright of the second support arch 7. Advantageously, the inclination of the first lateral crossbeam 10A compared to the corresponding lower spar 9 is substantially the same at the inclination of the second lateral crossbeam 10B compared to the corresponding lower spar 9. The installation of the lateral crossbeams 10A and 10B contributes to increase the safety characteristics of the safety cage device 100 (and consequently of the vehicle to which the safety cage device 100 is applied), since the lateral crossbeams 10A and 10B exert a significant contrasting action against the warping that could be caused by an impact to the front or rear of the vehicle and which could cause deformations between the support arches 4 and 7 such as to put the vehicle occupants' safety at risk.

The safety cage device 100 described here is also configured to be fixed to the off-road vehicle 200 frame. In a preferred and non-limiting embodiment, it comprises supports 5, 8 configured to be connected at one their first predefined portion, in particular at a first end portion, at the first support arch 4 and/or at the second support arch 7, and at one their second predefined portion, in particular at a second end, to the off-road vehicle 200 frame. In this way, these supports uphold the weight of the safety cage device 100 itself and rigidly constrain it to the stronger portion (the frame, in fact), of the off-road vehicle 200.

In the event of the vehicle overturning, the supports 5, 8 unload the weight of the vehicle to the safety cage 100, preventing in this way, the passenger compartment from being crushed and safeguarding the safety of the driver and passengers.

Regardless of the configuration assumed, the supports 5, 8 are configured to provide a symmetrical support for the safety cage device 100, and they are present both on the left and right side of the off-road vehicle 200. The safety cage device 100 it is therefore configured to be fixed at least at two points to the frame.

The embodiment of the safety cage device 100 shown in the attached figures comprises in particular a first pair of supports 5 which in turn comprises a first support fixed to the first upright (or left upright) of the first support arch 4 and a second support fixed to the second upright (or right upright) of the first support arch 4. The embodiment of the safety cage device 100 shown in the attached figures also comprises a second pair of supports 8 which in turn comprises a first support fixed to the first upright (or left upright) of the second support arch 7 and a second support fixed to the second upright (or right upright) of the second support arch 7.

The first pair of supports 5 and the second pair of supports 8 can be welded respectively to the first support arch 4 and to the second support arch 7. Alternatively, the first and second pair of supports 5, 8 can be removably connectable to the respective first, second support arch 4, 7, and the removable fixing between them takes place for example through a plurality of screws, positioned within holes present at connection flanges made (for example, in the form of circular plates) at the ends of each of the supports of the first pair of supports 5 and of the second pair of supports 8. In this case, the ends of the first support arch 4 and of the second support arch 7 are, in turn, provided with respective connection flanges, in shape coupling with the connection flanges of the supports 5, 8.

As can be seen from the attached figures, each of the first and second pairs of supports 5, 8 comprises "L"-shaped supports, however this particular shaping configuration must not be understood in a limiting way.

It is observed that the supports 5, 8 extend out (at least for part) from the off-road vehicle 200 bodywork, while remaining within the vehicle's shape. In fact, in order to be able to be joined with the frame, the supports of the first and/or second pairs of supports 5, 8 pass under, and/or cross, cabin's floor, and are joined with the frame. To this end, the pairs of supports 5, 8 advantageously terminate with respective joining plates. In one embodiment, the joining plates are in the form of discs or rings welded to the ends of the supports 5, 8 and equipped with passage holes to allow them to be anchored to the vehicle frame by bolts.

In the embodiment illustrated in the attached figures, the conformation of the supports of the first and second pairs of supports 5, 8 it is such that they are joined to the frame with connection on the spars of the frame itself. However, this configuration is not to be intented as limiting, since the Applicant has also conceived an alternative embodiment in which at least part, or all the supports of the first and second pairs of supports 5, 8 are joined to crossbeams of the frame.

The Applicant points out that the fixing to the frame of the supports of the the first and/or second pairs of supports 5, 8 takes place in a removable way through a joint with screws and nuts. Thanks to this aspect, it is advantageously possible to replace the supports in case of damage or to facilitate the removal of the safety cage device 100 from the vehicle.

However, this is not the only possible alternative, since it is also possible that the fixing of the supports of the first and/or second pairs of supports 5, 8 takes place in a not removable way, for example, and not limitedly, by welding.

In a preferred embodiment of the present invention, the front frame 1 contributes to the connection of the safety cage 100 to the frame.

In this regard, at least two pass-through holes can be obtained on the lower crossbeam of the front frame 1, in particular at least a first pass-through hole 29 arranged at the extremal right portion of the lower crossbeam of the front frame 1 and at least a second pass-through hole 28 arranged at the extremal left portion of the lower crossbeam of the front frame 1. Such pass-through holes 28, 29 are used for anchoring, by bolts, the front frame 1 to a structural element of the vehicle, for example to a separating bulkhead between the passenger compartment and the engine compartment, which is arranged adjacent to the lower crossbeam of the front frame 1, it is constrained to the vehicle frame and, in some off-road vehicle models, it has coupling strips that branch off from the upper side of the bulkhead.

Alternatively, the safety cage device according to the present invention can comprise at least two brackets which extend starting from the lower crossbeam of the front frame 1, in particular at least one first bracket which extends starting from the extremal right portion of the lower crossbeam of the front frame 1 and at least one second bracket which extends starting from the extremal left portion of the lower crossbeam of the front frame 1. Specifically, each bracket extends along a substantially orthogonal direction to the development direction of the lower crossbeam of the front frame 1, or along a substantially orthogonal direction to the first direction Y, so as to create a sort of prolongation of a lateral upright of the front frame 1. Each bracket has at least a partial extension along the third direction X.

Each bracket can be welded or screwed to the vehicle's front frame 1, the end of the bracket opposite the end connected to the front frame 1 of the vehicle, being possibly provided with a pass-through hole, in order to allow it to be anchored by a bolt to a structural element of the vehicle, for example to said separating bulkhead between the passenger compartment and the engine compartment.

In a particularly advantageous embodiment of the present invention, at least two pairs of brackets are provided which extend starting from the lower crossbeam of the front frame 1 along a substantially orthogonal direction to the development direction of the lower crossbeam of the front frame 1, that is along a direction orthogonal to the first direction Y, i.e. at least a first pair of brackets extending starting from the extremal right portion of the lower crossbeam of the front frame 1 and at least a second pair of brackets extending starting from the extremal left portion of the lower crossbeam of the front frame 1.

So, each pair of brackets has an extension, at least partial, along the third direction X. Each pair of brackets includes a respective front bracket and a respective rear bracket. In each pair of brackets, the front bracket is welded to the front face of the front frame 1 or forced against the front face of the front frame 1, while the rear bracket is welded to the back face of the front frame 1 or forced against the back face of the front frame 1. The ends of the front bracket and of the rear bracket opposite to the ends connected to the front frame 1 have coupling device (for example, one or more pass-through holes) to a vehicle's structural element, such as, for example, the separating bulkhead between the passenger compartment and the engine compartment. The front bracket and the rear bracket of each pair of brackets advantageously have shape and/or size identity.

In the preferred embodiment of the present invention in which the front frame 1 contributes to the connection of the safety cage device 100, the safety cage device has a number of fixing points to the vehicle frame equal to six (that is, two triples of fixing points arranged in mutually symmetrical positions). In particular, in this form of implementation there are:
- a pair of central fixing points 30a, 30b, positioned at the ends of the supports 5, which are connected to the first support arch 4, or positioned at the junction plates between the supports 5 and the vehicle frame,
- a pair of rear fixing points 31a, 31b, positioned at the ends of the supports 5, which are connected to the second support arch 7, or positioned at the junction plates between the supports 8 and the vehicle frame,
- a pair of front fixing points, positioned at the anchoring elements on the front frame 1, or at the pass-through holes 28, 29 obtained on the lower crossbeam of the front frame 1 or on the brackets rigidly connected to the lower crossbeam of the front frame 1.

It should be pointed out that the configuration of the safety cage device according to the invention with six fixing points 28, 29, 30a, 30b, 31a, 31b to the vehicle frame guarantees, in the event of an impact and/or an overturning, a optimal protection of the entire passenger compartment, maximizing the safety of both the people sitting on the front seats and the people sitting on the rear seats. Eyelets or hooks for auxiliary fixing accessories, including, in a non-exhaustive way, multi-point safety belts, can be applied to the safety cage device 100 object of the present invention.

The installation of the safety cage device object by the the present invention is carried out in accordance with the steps described below.

An optional phase includes the possible removal of the internal coating of the vehicle bodywork, in order to expose the bodywork itself. Obviously, this step is defined as optional since the case could arise in which the off-road vehicle 200 bodywork is substantially bare, and in this case the removal of the coating is not applicable.

A subsequent step comprises the installation of the safety cage device 100 inside the off-road vehicle 200 bodywork, proceeding to place the safety cage device 100 itself substantially at the corner portions, recesses or, in any case, in substantial proximity to the bodywork, so that space inside the cabin can be safeguarded as far as possible.

One step of installing the safety cage device 100 includes the union of different elements of the safety cage device 100 in order to pass from a disassembled configuration, at least partially, to a fully assembled configuration, in which the various elements of the safety cage device 100 form a substantially rigid structure for the vehicle reinforcement and protection.

Assembly is preferably done by screwing different elements of the safety cage device. In this regard, the Applicant intends to highlight how these elements are advantageously monolithic, as they can also be obtained by welding of several sub-elements.

The installation of the safety cage device 100 also includes fixing, in particular the rigid fixing, of the safety cage device 100 to the frame through a rigid connection, preferably removable, of a plurality of supports on the frame of the off-road vehicle.

Advantageously, this rigid connection is obtained by providing six fixing points 28, 29, 30a, 30b, 31a, 31b of the safety cage device 100 to the vehicle frame, as previously described.

Another step, again optional, includes the reinstallation of the internal coating of the vehicle body, which ideally should not need any adaptation due to the installation of the safety cage device 100 object of the present invention.

It is noted in detail that the safety cage device 100 object of the present invention, being installed within the bodywork of the off-road vehicle 200 and in particular not exceeding the shape limits of the off-road vehicle 200, it can be easily approved even in those countries or regions in which there are important limitations to the adaptations of the vehicles sizes.

Finally, the Applicant points out that the safety cage device 100 object of the present invention is also capable of providing an overall strengthening of the off-road vehicle 200 in terms of torsional rigidity. Therefore, the safety cage device 100 not only performs the function of protection if the vehicle accidentally undergoes overturning or impacts, but also performs a beneficial function even during the traditional use of the off-road vehicle 200. Where certain configurations of the ground determine a "twist" of the rear axle and of the front axle of the off-road vehicle, the presence of the safety cage device 100 object of the present invention advantageously allows to reduce the twisting effect which otherwise is created on the frame and the bodywork of the off-road vehicle.

Although optionally, to the safety cage device 100 object of the present invention certain protections can be fixed for the transmission members of the off-road vehicle 200 and/or eyelets for towing can be integrated.

### Advantages of the invention

From the characteristics of the safety cage device 100 previously described, it is clear that the present invention achieves a significant increase in the safety properties of the occupants of the vehicle 200. In this regard, it is emphasized that the frame of the safety cage 100 can vary and become load-bearing (see, for example, the front frame 1 supporting the windscreen), giving overall more rigidity and more structural solidity to the vehicle 200. The present invention in fact allows to combine, within the safety cage 100, tubular and/or boxed structures with bearing structures.

It is then highlighted how the safety cage device 100 object of the present invention, when installed on the vehicle 200, is hidden from view, so the aesthetics of the vehicle 200 is unaltered. Similarly, passing to a functional point of view, the internal and external sizes of the vehicle 200 are unaltered.

It is also highlighted that the present invention fully achieves the objective of providing a safety cage device for vehicles (in particular for off-road vehicles) which does not cause a contraction of the internal volume of the passenger compartment, given that the overall sizes of the safety cage only occupy spaces of the vehicle which are external to the passenger compartment and cannot be used either as spaces for the accommodation of driver and passengers, or as loading spaces.

As regards also the safety characteristics of the safety cage device according to the present invention, it is primarily noted that the areas inside the passenger compartment, where the driver and passengers' heads can be found, are optimally protected both in case of frontal impact of the vehicle and in the event of the vehicle overturning. Such protection is ensured in particular by the front frame which is integrated between the vehicle elements, with structural functionality and possibly anchored to the vehicle frame.

Finally, it is emphasized that the safety characteristics of the device according to the present invention are optimized by the fact that up to six attachment points to the vehicle frame are contemplated.

In the embodiments with lateral crossbeams, the safety characteristics are further increased by the existence of an increased resistance to twisting that can be induced by a front impact or a rear impact.

The invention is not limited to the attached embodiments. In particular, in the following claims, when elements of the safety cage device 100 and/or of the off-road vehicle 200 are provided with reference numbers or signs, such reference numbers or signs are introduced for the only purpose of increasing the intelligibility of the claims and, therefore, they are not to be considered limitative.

Finally, it is clear that to the subject of the present invention additions, modifications or variations may be applied, which are obvious to a technician skilled in the art without departing from the scope of protection provided by the attached claims.

## Claims

1. Safety cage device (100) for vehicles, in particular for off-road vehicles (200), the safety cage device (100) being configured to make a substantially rigid structural element intended for the reinforcement and protection of a vehicle (200), wherein said safety cage device (100) comprises:
- at least a first support arch (4) extending at least partially and mainly along a first direction (Y) and along a second direction (Z) transversal to the first direction (Y),
- a front frame (1) and
- a first plurality of reinforcing elements (3), the reinforcing elements (3) of said first plurality being positioned between the first support arch (4) and the front frame (1),
wherein said front frame (1) is configured to integrate and/or replace a windscreen frame (201) of the vehicle (200),
wherein said safety cage device (100) comprises at least a first pass-through hole (29) or a first bracket or a first pair of brackets at a lower right portion of said front frame (1) and a second pass-through hole (28) or a second bracket or a second pair of brackets at a lower left portion of said front frame (1), in order to anchor said safety cage device (100) to the frame of said vehicle (200) in correspondence to said front frame (1), and
wherein the first support arch (4) comprises a crossbeam (4s) which has a length such as to cross, in use, a roof (200p) of the bodywork of the vehicle (200), the first support arch (4) being configured to lie, in use, in substantial alignment with central uprights (202) of the bodywork of the vehicle (200),
**characterised in that** the reinforcing elements (3) of said first plurality are crossed, the reinforcing elements (3) of said first plurality being configured to structurally constrain the crossbeam (4s) of the first support arch (4) to the front frame (1) substantially at a roof (200p) of the bodywork of the vehicle (200), and
**in that** the safety cage device (100) comprises a second plurality of crossed reinforcing elements (6), positioned between the first support arch (4) and a second support arch (7) and configured to structurally constrain a crossbeam (7s) of the second support arch (7) to the crossbeam (4s) of the first support arch (4).

2. Safety cage device (100) according to claim 1, wherein the second direction (Z) is orthogonal to the first direction (Y).

3. Safety cage device (100) according to claim 1 or according to claim 2, wherein the safety cage device (100) is configured to be installed at least partially within a bodywork of the vehicle (200).

4. Safety cage device (100) according to anyone of the preceding claims, wherein the safety cage device (100) can be assembled and has reduced or no overall encumbrance, configured to be installed in substantial proximity to an internal face of the bodywork of the vehicle (200), without protruding from at least part of the upper portion of the bodywork of the vehicle (200), said support arch (4) being made of metallic material or composite material.

5. Safety cage device (100) according to anyone of the preceding claims, configured to exhibit at least a first assembled, or use, operational configuration, wherein it achieves said substantially rigid structural element intended for reinforcement and protection of the vehicle (200), and at least a second configuration disassembled, intended to facilitate the introduction or the extraction of the safety cage device (100) from said vehicle (200), the safety cage device (100) being configured to be at least partially coated with an internal coating layer of the bodywork of the vehicle (200).

6. Safety cage device (100) according to anyone of the preceding claims, wherein:
- the safety cage device (100) has a tubular and/or box-shaped structure,
- said tubular and/or box-shaped structure is at least partially with a substantially rectangular section and
- said tubular and/or box-shaped structure is a structure with reduced or no overall encumbrance and has a smaller thickness than the longitudinal encumbrance.

7. Safety cage device (100) according to anyone of the preceding claims, wherein the safety cage device (100) is configured to be installed in correspondence of cavity spaces between the internal face of the bodywork of the vehicle (200) and a coating element of the bodywork of the vehicle (200).

8. Safety cage device (100) according to anyone of the preceding claims, comprising at least one pair of spars (11) extending along a third direction (X) transversal to, in particular orthogonal to, the first and the second direction and made of metallic material or in composite material, said pair of spars (11) comprising a first and second spars each joined at a predefined portion to the first support arch (4).

9. Safety cage device (100) according to claim 8, wherein the second support arch (7) extends at least partially and mainly along a first direction (Y) and along a second direction (Z) orthogonal to the first direction (Y), wherein:
- the second support arch (7) lies substantially on a parallel plane to the first support arch (4),
- the second support arch (7) is fixed to said spars (11),
- the crossbeam (7s) of the second support arch (7) has a length such as to cross, in use, a roof (200p) of the bodywork, the second support arch (7) being configured to lie, in use, in substantial alignment with rear uprights (203) of the bodywork of the vehicle (200).

10. Safety cage device (100) according to anyone of the preceding claims, comprising at least a first pair of supports (5) configured to fix the safety cage device (100) to a frame of the vehicle (200), wherein:
- the supports (5) of said first pair are configured to join the safety cage device (100) rigidly to the frame of the vehicle (200) and to support the weight of the safety cage device (100),
- the supports (5) of said first pair are configured to provide a symmetrical support of the safety cage device (100) on the frame of the vehicle (200),
- the supports (5) of said first pair are directly connected to the first support arch (4),
- the first support arch (4) comprises a first and a second uprights,
- the first and second uprights of said first support arch (4) are oriented substantially along said second direction (Z) and each extend parallel to a left and a right sides, respectively, of the vehicle (200),
- the supports (5) of said first pair comprise a first support fixed to the first upright of the first support arch (4) and a second support fixed to the second upright of the first support arch (4),
- the supports (5) of said first pair are configured to be fixed to a longitudinally intermediate and/or central portion of the frame of the vehicle (200),
- the safety cage device (100) comprises at least one second pair of supports (8) configured to fix the safety cage device (100) to the frame of the vehicle (200),
- the supports (8) of said second pair are configured to join the safety cage device (100) rigidly to the frame of the vehicle (200) and to support the weight of the safety cage device (100),
- the supports (8) of said second pair are configured to provide a symmetrical support of the safety cage device (100) on the frame of the vehicle (200) and
- the supports (8) of said second pair are directly connected to the second support arch (7).

11. Safety cage device (100) according to anyone of the preceding claims, comprising:
- a plurality of lower spars (9) substantially aligned along a parallel direction to said third direction (X) and directly joined at a their first end to the first support arch (4) and at a their second end to the second support arch (7) and
- a plurality of front spars (2), each substantially extending along a parallel direction to said third direction (X), and directly joined at a their first end to the first support arch (4) and at a their second end to the front frame (1).

12. Safety cage device (100) according to anyone of the preceding claims, comprising at least one central crossbeam (10), directly connected, at an its first and an its second end, to the first and respectively to the second upright of the first support arch (4), wherein said central crossbeam (10) has a predetermined inclination compared to the crossbeam (4s) of said first support arch (4).

13. Safety cage device (100) according to anyone of the preceding claims, comprising a plurality of lateral crossbeams (10A, 10B) joined to the first support arch (4) at their first ends and to the second support arch (7) at their second ends, said lateral crossbeams (10A, 10B) being arranged above said lower spars (9), each of said lateral crossbeams (10A, 10B) extending along an inclined direction compared to said third direction (X), so that the distance between each of said lateral crossbeams (10A, 10B) and the respective one between said lower spars (9) in correspondence to said first support arch (4) is greater than the distance between each of said lateral crossbeams (10A, 10B) and the respective one between said lower spars (9) in correspondence to said second support arch (7).

14. Vehicle (200), in particular off-road vehicle, comprising a frame, for example a side beams and crossbeams-type frame, and a bodywork joined to said frame and defining at least a left side (200s), a right side (200d) and a roof (200p) positioned above and joining the left side (200s) to the right side (200d), said vehicle comprising a safety cage device (100) according to anyone of the preceding claims.

15. Vehicle (200) according to the preceding claim, wherein the safety cage device (100) is fixed to said frame at least at six points (28, 29, 30a, 30b, 31a, 31b).

## Patentansprüche

1. Sicherheitskäfigvorrichtung (100) für Fahrzeuge, insbesondere für Geländefahrzeuge (200), wobei die Sicherheitskäfigvorrichtung (100) dazu eingerichtet ist, ein im Wesentlichen starres Strukturelement auszumachen, welches für die Verstärkung und den Schutz eines Fahrzeugs (200) gedacht ist, wobei die Sicherheitskäfigvorrichtung (100) umfasst:
- wenigstens einen ersten Halterungsbogen (4), welcher sich wenigstens teilweise und hauptsächlich entlang einer ersten Richtung (Y) und entlang einer zu der ersten Richtung (Y) transversalen zweiten Richtung (Z) erstreckt,
- einen vorderen Rahmen (1) und
- eine erste Mehrzahl von Verstärkungselementen (3), wobei die Verstärkungselemente (3) der ersten Mehrzahl zwischen dem ersten Halterungsbogen (4) und dem vorderen Rahmen (1) positioniert sind,
wobei der vordere Rahmen (1) dazu eingerichtet ist, einen Windschutzscheibenrahmen (201) des Fahrzeugs (200) zu integrieren und/oder zu ersetzen,
wobei die Sicherheitskäfigvorrichtung (100) wenigstens an einem unteren rechten Abschnitt des vorderen Rahmens (1) ein erstes Durchlassloch (29) oder eine erste Klammer oder ein erstes Paar von Klammern und an einem unteren linken Abschnitt des vorderen Rahmens (1) ein zweites Durchlassloch (28) oder eine zweite Klammer oder ein zweites Paar von Klammern umfasst, um die Sicherheitskäfigvorrichtung (100) in Übereinstimmung mit dem vorderen Rahmen (1) an dem Rahmen des Fahrzeugs (200) zu verankern, und
wobei der erste Halterungsbogen (4) einen Querträger (4s) umfasst, welcher eine derartige Länge aufweist, dass er in Verwendung ein Dach (200p) der Karosserie des Fahrzeugs (200) kreuzt, wobei der erste Halterungsbogen (4) dazu eingerichtet ist, in Verwendung im Wesentlichen in einer Ausrichtung mit zentralen Säulen (202) der Karosserie des Fahrzeugs (200) zu liegen,
**dadurch gekennzeichnet, dass** die Verstärkungselemente (3) der ersten Mehrzahl gekreuzt sind, wobei die Verstärkungselemente (3) der ersten Mehrzahl dazu eingerichtet sind, den Querträger (4s) des ersten Halterungsbogens (4) im Wesentlichen an einem Dach (200p) der Karosserie des Fahrzeugs (200) strukturell an den vorderen Rahmen (1) zu zwängen, und
dass die Sicherheitskäfigvorrichtung (100) eine zweite Mehrzahl gekreuzter Verstärkungselemente (6) umfasst, welche zwischen dem ersten Halterungsbogen (4) und einem zweiten Halterungsbogen (7) positioniert sind und dazu eingerichtet sind, einen Querträger (7s) des zweiten Halterungsbogens (7) strukturell an den Querträger (4s) des ersten Halterungsbogens (4) zu zwängen.

2. Sicherheitskäfigvorrichtung (100) nach Anspruch 1, wobei die zweite Richtung (Z) orthogonal zu der ersten Richtung (Y) ist.

3. Sicherheitskäfigvorrichtung (100) nach Anspruch 1 oder nach Anspruch 2, wobei die Sicherheitskäfigvorrichtung (100) dazu eingerichtet ist, wenigstens teilweise innerhalb einer Karosserie des Fahrzeugs (200) installiert zu sein.

4. Sicherheitskäfigvorrichtung (100) nach einem der vorhergehenden Ansprüche, wobei die Sicherheitskäfigvorrichtung (100) montiert sein kann und eine reduzierte oder keine allgemeine Systemhöhe aufweist, dazu eingerichtet, im Wesentlichen in einer Nähe zu einer Innenfläche der Karosserie des Fahrzeugs (200) installiert zu sein, ohne von wenigstens einem Teil des oberen Abschnitts der Karosserie des Fahrzeugs (200) vorzustehen, wobei der Halterungsbogen (4) aus einem metallischen Material oder einem Verbundmaterial hergestellt ist.

5. Sicherheitskäfigvorrichtung (100) nach einem der vorhergehenden Ansprüche, welche dazu eingerichtet ist, wenigstens eine erste montierte, oder Verwendungs-, Betriebskonfiguration, wobei sie das im Wesentlichen starre Strukturelement schafft, für eine Verstärkung und einen Schutz des Fahrzeugs (200) gedacht, und wenigstens eine zweite demontierte Konfiguration aufzuweisen, dazu gedacht, das Einführen oder das Entnehmen der Sicherheitskäfigvorrichtung (100) von dem Fahrzeug (200) zu erleichtern, wobei die Sicherheitskäfigvorrichtung (100) dazu eingerichtet ist, wenigstens teilweise mit einer Innenbeschichtungsschicht der Karosserie des Fahrzeugs (200) beschichtet zu sein.

6. Sicherheitskäfigvorrichtung (100) nach einem der vorhergehenden Ansprüche, wobei:
- die Sicherheitskäfigvorrichtung (100) eine rohrförmige und/oder kastenförmige Struktur aufweist,
- die rohrförmige und/oder kastenförmige Struktur wenigstens teilweise mit einem im Wesentlichen rechteckigen Querschnitt vorliegt und
- die rohrförmige und/oder kastenförmige Struktur eine Struktur mit reduzierter oder keiner allgemeinen Systemhöhe ist und eine kleinere Dicke als die longitudinale Systemhöhe aufweist.

7. Sicherheitskäfigvorrichtung (100) nach einem der vorhergehenden Ansprüche, wobei die Sicherheitskäfigvorrichtung (100) dazu eingerichtet ist, in Übereinstimmung mit Hohlräumen zwischen der Innenfläche der Karosserie des Fahrzeugs (200) und einem Beschichtungselement der Karosserie des Fahrzeugs (200) installiert zu sein.

8. Sicherheitskäfigvorrichtung (100) nach einem der vorhergehenden Ansprüche, umfassend wenigstens ein Paar von Holmen (11), welche sich entlang einer dritten Richtung (X) erstrecken, welche transversal zu, insbesondere orthogonal zu, der ersten und der zweiten Richtung ist, und welche aus einem metallischen Material oder aus einem Verbundmaterial hergestellt sind, wobei das Paar von Holmen (11) einen ersten und einen zweiten Holm umfasst, welche jeweils an einem vordefinierten Abschnitt mit dem ersten Halterungsbogen (4) verbunden sind.

9. Sicherheitskäfigvorrichtung (100) nach Anspruch 8, wobei sich der zweite Halterungsbogen (7) wenigstens teilweise und hauptsächlich entlang einer ersten Richtung (Y) und entlang einer zu der ersten Richtung (Y) orthogonalen zweiten Richtung (Z) erstreckt, wobei:
- der zweite Halterungsbogen (7) im Wesentlichen auf einer zu dem ersten Halterungsbogen (4) parallelen Ebene liegt,
- der zweite Halterungsbogen (7) an den Holmen (11) fixiert ist,
- der Querträger (7s) des zweiten Halterungsbogens (7) eine derartige Länge aufweist, dass er in Verwendung ein Dach (200p) der Karosserie kreuzt, wobei der zweite Halterungsbogen (7) dazu eingerichtet ist, in Verwendung im Wesentlichen in einer Ausrichtung mit hinteren Säulen (203) der Karosserie des Fahrzeugs (200) zu liegen.

10. Sicherheitskäfigvorrichtung (100) nach einem der vorhergehenden Ansprüche, umfassend wenigstens ein erstes Paar von Halterungen (5), welche dazu eingerichtet sind, die Sicherheitskäfigvorrichtung (100) an einem Rahmen des Fahrzeugs (200) zu fixieren, wobei:
- die Halterungen (5) des ersten Paars dazu eingerichtet sind, die Sicherheitskäfigvorrichtung (100) starr mit dem Rahmen des Fahrzeugs (200) zu verbinden und das Gewicht der Sicherheitskäfigvorrichtung (100) zu haltern,
- die Halterungen (5) des ersten Paars dazu eingerichtet sind, eine symmetrische Halterung der Sicherheitskäfigvorrichtung (100) an dem Rahmen des Fahrzeugs (200) bereitzustellen,
- die Halterungen (5) des ersten Paars mit dem ersten Halterungsbogen (4) direkt verbunden sind,
- der erste Halterungsbogen (4) eine erste und eine zweite Säule umfasst,
- die erste und die zweite Säule des ersten Halterungsbogens (4) im Wesentlichen entlang der zweiten Richtung (Z) ausgerichtet sind und sich jeweils parallel zu einer linken bzw. einer rechten Seite des Fahrzeugs (200) erstrecken,
- die Halterungen (5) des ersten Paars eine erste Halterung, welche an der ersten Säule des ersten Halterungsbogens (4) fixiert ist, und eine zweite Halterung umfassen, welche an der zweiten Säule des ersten Halterungsbogens (4) fixiert ist,
- die Halterungen (5) des ersten Paars dazu eingerichtet sind, an einem longitudinal mittleren und/oder zentralen Abschnitt des Rahmens des Fahrzeugs (200) fixiert zu sein,
- die Sicherheitskäfigvorrichtung (100) wenigstens ein zweites Paar von Halterungen (8) umfasst, welche dazu eingerichtet sind, die Sicherheitskäfigvorrichtung (100) an dem Rahmen des Fahrzeugs (200) zu fixieren,
- die Halterungen (8) des zweiten Paars dazu eingerichtet sind, die Sicherheitskäfigvorrichtung (100) starr mit dem Rahmen des Fahrzeugs (200) zu verbinden und das Gewicht der Sicherheitskäfigvorrichtung (100) zu haltern,
- die Halterungen (8) des zweiten Paars dazu eingerichtet sind, eine symmetrische Halterung der Sicherheitskäfigvorrichtung (100) an dem Rahmen des Fahrzeugs (200) bereitzustellen, und
- die Halterungen (8) des zweiten Paars mit dem zweiten Halterungsbogen (7) direkt verbunden sind.

11. Sicherheitskäfigvorrichtung (100) nach einem der vorhergehenden Ansprüche, umfassend:
- eine Mehrzahl unterer Holme (9), welche im Wesentlichen entlang einer zu der dritten Richtung (X) parallelen Richtung ausgerichtet sind und an ihrem ersten Ende mit dem ersten Halterungsbogen (4) und an ihrem zweiten Ende mit dem zweiten Halterungsbogen (7) direkt verbunden sind, und
- eine Mehrzahl vorderer Holme (2), welche sich jeweils im Wesentlichen entlang einer zu der dritten Richtung (X) parallelen Richtung erstrecken und an ihrem ersten Ende mit dem ersten Halterungsbogen (4) und an ihrem zweiten Ende mit dem vorderen Rahmen (1) direkt verbunden sind.

12. Sicherheitskäfigvorrichtung (100) nach einem der vorhergehenden Ansprüche, umfassend wenigstens einen zentralen Querträger (10), welcher an seinem ersten und seinem zweiten Ende mit der ersten bzw. mit der zweiten Säule des ersten Halterungsbogens (4) direkt verbunden ist, wobei der zentrale Querträger (10) im Vergleich zu dem Querträger (4s) des ersten Halterungsbogens (4) eine vorbestimmte Neigung aufweist.

13. Sicherheitskäfigvorrichtung (100) nach einem der vorhergehenden Ansprüche, umfassend eine Mehrzahl lateraler Querträger (10A, 10B), welche an ihren ersten Enden mit dem ersten Halterungsbogen (4) verbunden sind und an ihren zweiten Enden mit dem zweiten Halterungsbogen (7) verbunden sind, wobei die lateralen Querträger (10A, 10B) oberhalb der unteren Holme (9) angeordnet sind, wobei sich jeder der lateralen Querträger (10A, 10B) im Vergleich zu der dritten Richtung (X) entlang einer geneigten Richtung erstreckt, so dass der Abstand zwischen jedem der Querträger (10A, 10B) und dem jeweiligen zwischen den unteren Holmen (9) in Übereinstimmung mit dem ersten Halterungsbogen (4) größer als der Abstand zwischen jedem der lateralen Querträger (10A, 10B) und dem jeweiligen zwischen den unteren Holmen (9) in Übereinstimmung mit dem zweiten Halterungsbogen (7) ist.

14. Fahrzeug (200), insbesondere Geländefahrzeug, umfassend einen Rahmen, zum Beispiel einen Rahmen von einem Typ mit Seitenträgern und Querträgern, und eine Karosserie, welche mit dem Rahmen verbunden ist und wenigstens eine linke Seite (200s), eine rechte Seite (200d) und ein Dach (200p) definiert, welches oberhalb positioniert ist und die linke Seite (200s) mit der rechten Seite (200d) verbindet, wobei das Fahrzeug eine Sicherheitskäfigvorrichtung (100) nach einem der vorhergehenden Ansprüche umfasst.

15. Fahrzeug (200) nach dem vorhergehenden Anspruch, wobei die Sicherheitskäfigvorrichtung (100) an sechs Punkten (28, 29, 30a, 30b, 31a, 31b) an dem Rahmen fixiert ist.

## Revendications

1. Dispositif de cage de sécurité (100) pour véhicules, en particulier pour véhicules (200) tout-terrain, le dispositif de cage de sécurité (100) étant conçu pour fabriquer un élément structurel sensiblement rigide prévu pour le renforcement et la protection d'un véhicule (200), ledit dispositif de cage de sécurité (100) comprenant :
- au moins une première arche de support (4) s'étendant au moins partiellement et principalement le long d'un premier sens (Y) et le long d'un second sens (Z) transversal au premier sens (Y),
- un cadre avant (1) et
- une première pluralité d'éléments de renforcement (3), les éléments de renforcement (3) de ladite première pluralité étant positionnés entre la première arche de support (4) et le cadre avant (1),
ledit cadre avant (1) étant conçu pour intégrer et/ou remplacer un cadre de pare-brise (201) du véhicule (200),
ledit dispositif de cage de sécurité (100) comprenant au moins un premier trou traversant (29) ou un premier étrier ou une première paire d'étriers au niveau d'une portion droite inférieure dudit cadre avant (1) et un second trou traversant (28) ou un second étrier ou une seconde paire d'étriers au niveau d'une portion gauche inférieure dudit cadre avant (1), afin d'ancrer ledit dispositif de cage de sécurité (100) au cadre dudit véhicule (200) en correspondance dudit cadre avant (1), et
la première arche de support (4) comprenant une poutre transversale (4s) qui présente une longueur afin de traverser, durant l'utilisation, un toit (200p) de la carrosserie du véhicule (200), la première arche de support (4) étant conçue pour reposer, durant l'utilisation, en alignement substantiel avec des montants centraux (202) de la carrosserie du véhicule (200),
**caractérisé en ce que** les éléments de renforcement (3) de ladite première pluralité sont croisés, les éléments de renforcement (3) de ladite première pluralité étant conçus pour contraindre structurellement la poutre transversale (4s) de la première arche de support (4) au cadre avant (1) sensiblement au niveau d'un toit (200p) de la carrosserie du véhicule (200), et
**en ce que** le dispositif de cage de sécurité (100) comprend une seconde pluralité d'éléments de renforcement croisés (6), positionnés entre la première arche de support (4) et une seconde arche de support (7) et conçus pour contraindre structurellement une poutre transversale (7s) de la seconde arche de support (7) à la poutre transversale (4s) de la première arche de support (4).

2. Dispositif de cage de sécurité (100) selon la revendication 1, le second sens (Z) étant orthogonal au premier sens (Y).

3. Dispositif de cage de sécurité (100) selon la revendication 1 ou selon la revendication 2, le dispositif de cage de sécurité (100) étant conçu pour être installé au moins partiellement à l'intérieur d'une carrosserie du véhicule (200).

4. Dispositif de cage de sécurité (100) selon l'une quelconque des revendications précédentes, le dispositif de cage de sécurité (100) pouvant être assemblé et présentant un encombrement réduit ou aucun encombrement, conçu pour être installé à proximité substantielle d'une face interne de la carrosserie du véhicule (200), sans faire saillie depuis au moins une partie de la portion supérieure de la carrosserie du véhicule (200), ladite arche de support (4) étant constituée de matériau métallique ou de matériau composite.

5. Dispositif de cage de sécurité (100) selon l'une quelconque des revendications précédentes, conçu pour faire preuve d'au moins une première configuration assemblée, ou durant l'utilisation, fonctionnelle, atteignant ledit élément structurel sensiblement rigide prévu pour le renforcement et la protection du véhicule (200), et d'au moins une seconde configuration démontée, prévue pour faciliter l'introduction ou l'extraction du dispositif de cage de sécurité (100) dudit véhicule (200), le dispositif de cage de sécurité (100) étant conçu pour être au moins partiellement revêtu d'une couche de revêtement interne de la carrosserie du véhicule (200).

6. Dispositif de cage de sécurité (100) selon l'une quelconque des revendications précédentes :
- le dispositif de cage de sécurité (100) ayant une structure tubulaire et/ou en forme de boîte,
- ladite structure tubulaire et/ou en forme de boîte ayant au moins partiellement une section sensiblement rectangulaire et
- ladite structure tubulaire et/ou en forme de boîte étant une structure ayant un encombrement réduit ou aucun encombrement et présentant une épaisseur inférieure à l'encombrement longitudinal.

7. Dispositif de cage de sécurité (100) selon l'une quelconque des revendications précédentes, le dispositif de cage de sécurité (100) étant conçu pour être installé en correspondance des espaces de cavité entre la face interne de la carrosserie du véhicule (200) et un élément de revêtement de la carrosserie du véhicule (200).

8. Dispositif de cage de sécurité (100) selon l'une quelconque des revendications précédentes, comprenant au moins une paire de longerons (11) s'étendant le long d'un troisième sens (X) transversal, en particulier orthogonal, au premier et au second sens et constitués de matériau métallique ou de matériau composite, ladite paire de longerons (11) comprenant un premier et un second longeron joints chacun au niveau d'une portion prédéfinie à la première arche de support (4).

9. Dispositif de cage de sécurité (100) selon la revendication 8, la seconde arche de support (7) s'étendant au moins partiellement et principalement le long d'un premier sens (Y) et le long d'un second sens (Z) orthogonal au premier sens (Y) :
- la seconde arche de support (7) reposant sensiblement sur un plan parallèle à la première arche de support (4),
- la seconde arche de support (7) étant fixée auxdits longerons (11),
- la poutre transversale (7s) de la seconde arche de support (7) présentant une longueur afin de traverser, durant l'utilisation, un toit (200p) de la carrosserie, la seconde arche de support (7) étant conçue pour reposer, durant l'utilisation, en alignement substantiel avec montants arrière (203) de la carrosserie du véhicule (200).

10. Dispositif de cage de sécurité (100) selon l'une quelconque des revendications précédentes, comprenant au moins une première paire de supports (5) conçus pour fixer le dispositif de cage de sécurité (100) à un cadre du véhicule (200) :
- les supports (5) de ladite première paire étant conçus pour joindre le dispositif de cage de sécurité (100) de manière rigide au cadre du véhicule (200) et pour supporter le poids du dispositif de cage de sécurité (100),
- les supports (5) de ladite première paire étant conçus pour fournir un support symétrique du dispositif de cage de sécurité (100) sur le cadre du véhicule (200),
- les supports (5) de ladite première paire étant directement raccordés à la première arche de support (4),
- la première arche de support (4) comprenant un premier et un second montant,
- le premier et le second montant de ladite première arche de support (4) étant orientés sensiblement le long dudit second sens (Z) et s'étendant chacun parallèle respectivement, aux côtés gauche et droit, du véhicule (200),
- les supports (5) de ladite première paire comprenant un premier support fixé au premier montant de la première arche de support (4) et un second support fixé au second montant de la première arche de support (4),
- les supports (5) de ladite première paire étant conçus pour être fixés à une portion longitudinalement intermédiaire et/ou centrale du cadre du véhicule (200),
- le dispositif de cage de sécurité (100) comprenant au moins une seconde paire de supports (8) conçus pour fixer le dispositif de cage de sécurité (100) au cadre du véhicule (200),
- les supports (8) de ladite seconde paire étant conçus pour joindre le dispositif de cage de sécurité (100) de manière rigide au cadre du véhicule (200) et pour supporter le poids du dispositif de cage de sécurité (100),
- les supports (8) de ladite seconde paire étant conçus pour fournir un support symétrique du dispositif de cage de sécurité (100) sur le cadre du véhicule (200) et
- les supports (8) de ladite seconde paire étant directement raccordés à la seconde arche de support (7).

11. Dispositif de cage de sécurité (100) selon l'une quelconque des revendications précédentes, comprenant :
- une pluralité de longerons inférieurs (9) sensiblement alignés le long d'un sens parallèle audit troisième sens (X) et joints directement au niveau de leur première extrémité à la première arche de support (4) et au niveau de leur seconde extrémité à la seconde arche de support (7) et
- une pluralité de longerons avant (2), s'étendant chacun sensiblement le long d'un sens parallèle audit troisième sens (X), et directement joints au niveau de leur première extrémité à la première arche de support (4) et au niveau de leur seconde extrémité au cadre avant (1).

12. Dispositif de cage de sécurité (100) selon l'une quelconque des revendications précédentes, comprenant au moins une poutre transversale centrale (10), directement raccordée, au niveau de sa première et de sa seconde extrémité, au premier et respectivement au second montant de la première arche de support (4), ladite poutre transversale centrale (10) ayant une inclinaison prédéterminée comparée à la poutre transversale (4s) dudit premier arche de support (4).

13. Dispositif de cage de sécurité (100) selon l'une quelconque des revendications précédentes, comprenant une pluralité de poutres transversales latérales (10A, 10B) jointes à la première arche de support (4) au niveau de leurs premières extrémités et à la seconde arche de support (7) au niveau de leurs secondes extrémités, lesdites poutres transversales latérales (10A, 10B) étant disposées au-dessus desdits longerons inférieurs (9), chacune desdites poutres transversales latérales (10A, 10B) s'étendant le long d'un sens incliné comparé audit troisième sens (X), de sorte que la distance entre chacune desdites poutres transversales latérales (10A, 10B) et l'un respectif entre lesdits longerons inférieurs (9) en correspondance de ladite première arche de support (4) est supérieure à la distance entre chacune desdites poutres transversales latérales (10A, 10B) et l'un respectif entre lesdits longerons inférieurs (9) en correspondance de ladite seconde arche de support (7).

14. Véhicule (200), en particulier véhicule tout-terrain, comprenant un cadre, par exemple un cadre de type poutres latérales et poutres transversales, et une carrosserie jointe audit cadre et définissant au moins un côté gauche (200s), un côté droit (200d) et un toit (200p) positionné au-dessus et joignant le côté gauche (200s) au côté droit (200d), ledit véhicule comprenant un dispositif de cage de sécurité (100) selon l'une quelconque des revendications précédentes.

15. Véhicule (200) selon la revendication précédente, le dispositif de cage de sécurité (100) étant fixé audit cadre au moins au niveau de six points (28, 29, 30a, 30b, 31a, 31b).
